# EUROPÄISCHE PATENTSCHRIFT

(11) **EP 2 838 699 B1**
(45) Veröffentlichungstag und Bekanntmachung des Hinweises auf die Patenterteilung: **20.09.2017**
(21) Anmeldenummer: 13717764.8
(22) Anmeldetag: 16.04.2013
(51) Int. Cl.: B25J 9/16

(54) **VERFAHREN ZUM BETREIBEN EINES ROBOTERS**
METHOD FOR OPERATING A ROBOT
PROCÉDÉ DE FONCTIONNEMENT D'UN ROBOT

(30) Priorität: 18.04.2012 DE 102012206350
(43) Veröffentlichungstag der Anmeldung: 25.02.2015
(73) Patentinhaber: Deutsches Zentrum für Luft- und Raumfahrt e.V., 51147 Köln (DE)
(72) Erfinder: KONIETSCHKE, Rainer, 82237 Wörthsee (DE); JÖRG, Stefan, 81241 München (DE); KLODMANN, Julian, 81245 München (DE)
(74) Vertreter: dompatent von Kreisler Selting Werner - Partnerschaft von Patent- und Rechtsanwälten mbB
(86) Internationale Anmeldenummer: PCT/EP2013/057888
(87) Internationale Veröffentlichungsnummer: WO 2013/156468

(56) Entgegenhaltungen:
- EP-A2- 1 447 770
- EP-A2- 2 602 681
- DE-A1-102005 060 967
- DE-A1-102006 035 292
- US-A- 5 772 593
- US-A1- 2006 195 226
- US-A1- 2009 192 524

## Beschreibung

Die Erfindung betrifft ein Verfahren zum Betreiben eines Roboters, insbesondere eines Telemanipulationsroboters.

Ein Telemanipulationsroboter kann beispielsweise zum Durchführen eines chirurgischen Eingriffs an einem Patienten verwendet werden, wie z.B. aus dem Dokument US 2009 / 0192524 A1 bekannt ist. Weiterhin werden Telemanipulationsroboter in der Industrie, beispielsweise zum Positionieren von Gegenständen oder zum Schweißen, verwendet. Ein Telemanipulationsroboter wird von einem Nutzer durch eine Eingabevorrichtung gesteuert.

Der Telemanipulationsroboter führt seine Aufgabe innerhalb einer Arbeitszelle aus. Bei der Einrichtung einer solchen Arbeitszelle muss gewährleistet werden, dass der Roboter diejenigen Punkte mit seinem funktionalen Ende erreicht, an denen er seine Aufgabe ausführen soll. Gleichzeitig muss sichergestellt werden, dass der Roboter dabei keine anderen Strukturen verletzt bzw. beschädigt.

Die Auslegung einer robotischen Arbeitszelle erfolgt gemäß dem Stand der Technik entweder nach dem Trial-And-Error-Verfahren oder mit Hilfe einer Planungsumgebung (in der virtuellen Realität, in der die Zelle simuliert werden kann). Die Übertragung in die reale Arbeitszelle erfolgt sodann durch Vermessen bzw. eine Registrierung, so dass der Roboter an der geplanten Stelle positioniert werden kann.

Das beschriebene Verfahren zur Auslegung einer robotischen Arbeitszelle eignet sich für Arbeitszellen, die einmal eingerichtet werden und dann nicht mehr verändert werden. Für Arbeitszellen, die flexibel für verschiedene durchzuführende Aufgaben eingerichtet werden sollen, eignet sich das Verfahren weniger gut. Dies liegt daran, dass dieses Verfahren sehr umständlich und langwierig ist. Insbesondere in Anwendungen der Medizin, wo für jeden Patienten die Arbeitszelle neu geplant werden muss, ist das Verfahren ungeeignet. Auch für flexible Arbeitszellen ist das Verfahren nicht geeignet. Ferner ist eine Planung, beispielsweise aufgrund fehlender Informationen, z.B. über die genaue Patientenanatomie zum Zeitpunkt der Operation, nicht immer möglich.

Aufgabe der Erfindung ist es, ein Verfahren zum Steuern eines Telemanipulationsroboters bereitzustellen, das die Einrichtung einer Arbeitszelle des Roboters vereinfacht.

Die Lösung der Aufgabe erfolgt erfindungsgemäß durch die Merkmale des Anspruchs 1.

Das erfindungsgemäße Verfahren dient dem Betreiben eines Roboters, insbesondere eines Telemanipulationsroboters und insbesondere dem Planen einer Operation mit einem Roboter. Hierbei kann es sich um eine medizinische Operation, aber auch um eine industrielle oder andere Operation handeln. Ein Telemanipulationsroboter kann mindestens einen Manipulatorarm aufweisen, der dem Führen eines Instruments zum Manipulieren eines Objekts dient. Bei dem Objekt kann es sich beispielsweise um den Körper eines Patienten handeln, so dass der Telemanipulationsroboter ein Telechirurgieroboter ist. Der Manipulatorarm kann durch eine Eingabevorrichtung von einem Benutzer, beispielsweise einem Chirurgen, gesteuert werden.

Erfindungsgemäß wird die räumliche Position und/ oder Lage mindestens einer Begrenzungsstruktur, die eine kinematische Begrenzung des Arbeitsraums verursacht, der mit dem Instrument erreichbar ist, das mit dem Roboterarm des Roboters verbunden ist, erfasst. Unter einer Begrenzungsstruktur wird jegliche Struktur, d.h. jegliches Objekt im Operationsbereich verstanden, das eine kinematische Begrenzung des erreichbaren Arbeitsraums verursachen kann. Eine kinematische Begrenzung liegt dann vor, wenn das Instrument des Manipulatorarms eine bestimmte Stelle im Operationsbereich nicht erreichen kann oder nicht erreichen darf. Somit kann es sich bei kinematischen Begrenzungen um softwareseitige oder hardwareseitige Begrenzungen handeln.

Beispielsweise kann eine kinematische Begrenzung dadurch verursacht sein, dass ein Gelenk des Manipulatorarms seinen Endanschlag erreicht und nicht über diese Position hinaus bewegt werden kann. Eine softwareseitige Begrenzung kann dann vorliegen, wenn der Manipulatorarm sich nicht über einen bestimmten Punkt hinaus bewegen darf, da ansonsten eine Risikostruktur verletzt bzw. beschädigt würde. Bei einer Risikostruktur kann es sich beispielsweise um ein empfindliches Gefäß im Körper eines Patienten handeln. Jedoch können auch andere Risikostrukturen, die zu schützen sind, beispielsweise in industriellen Anwendungen berücksichtigt werden. Kinematische Begrenzungen des Arbeitsraums können sich weiterhin durch andere Objekte ergeben, beispielsweise durch die geometrische Ausgestaltung des zu manipulierenden Objekts in der Arbeitszelle. Bei der Anwendung eines Telechirurgieroboters in der minimalinvasiven Chirurgie kann sich eine kinematische Begrenzung durch den Trokarpunkt ergeben, durch den minimalinvasive Instrumente in den Körper des Patienten eingeführt werden. Dieser stellt insofern eine kinematische Begrenzung des Arbeitsraums dar, als dass er die Anzahl der verfügbaren Freiheitsgrade für die Bewegung des Manipulatorarms einschränkt.

Erfindungsgemäß erfolgt ein schritthaltendes Darstellen des erreichbaren Arbeitsraums derart, dass eine Veränderung der Position oder Lage der Begrenzungsstruktur in Echtzeit zu einer Veränderung des dargestellten erreichbaren Arbeitsraums führt. Das Darstellen des erreichbaren Arbeitsraums erfolgt hierbei an einem durch das Instrument zu manipulierenden Objekt. Hierbei kann es sich beispielsweise bei einer chirurgischen Anwendung um den Körper eines Patienten handeln. Bei einer industriellen Anwendung kann es sich um ein anderes Objekt handeln, das manipuliert werden soll.

Somit kann der Manipulatorarm bzw. das Instrument durch den Benutzer im Rahmen der Einrichtung der Arbeitszelle am zu manipulierenden Objekt positioniert und ausgerichtet werden. Bei diesem Positionieren und Ausrichten wird dem Benutzer durch das erfindungsgemäße Verfahren in Echtzeit der erreichbare Arbeitsraum angezeigt. Somit kann der Benutzer sehr einfach und schnell die Position des Instruments herausfinden, die benötigt wird, um einen bestimmten Zielarbeitsraum zu erreichen, der für die Durchführung einer gewünschten Operation durch das Instrument zugänglich sein muss. Konkret würde beispielsweise ein Chirurg bei einem Telechirurgieroboter das Instrument an einer bestimmten Stelle am Patientenkörper platzieren, woraufhin ihm unmittelbar am Patientenkörper der erreichbare Arbeitsraum angezeigt werden kann. Sofern dieser erreichbare Arbeitsraum nicht dem gewünschten Zielarbeitsraum entspricht, kann der Chirurg das Instrument solange anpassen, bis das gewünschte Ergebnis erreicht wird. Ein Konfigurieren der Arbeitszelle ist somit auf besonders intuitive Weise möglich.

Unter einem Darstellen des erreichbaren Arbeitsraums an dem zu manipulierenden Objekt wird verstanden, dass der zu erreichende Arbeitsraum in unmittelbarem räumlichen Zusammenhang zu dem zu manipulierenden Objekt dargestellt wird. Der Arbeitsraum kann beispielsweise durch eine Projektion unmittelbar an dem zu manipulierenden Objekt selbst dargestellt werden. In dieser Ausführungsform findet somit eine Projektion in der realen Welt statt. Hierzu kann beispielsweise ein Projektor, ein Laserpointer oder ähnliches verwendet werden. Es können Linien, Punkte oder Flächen an der geometrisch korrekten Lage direkt auf das zu manipulierende Objekt projiziert werden. Alternativ oder zusätzlich kann der erreichbare Arbeitsraum zusammen mit dem zu manipulierenden Objekt im Rahmen einer Virtual-Reality-Darstellung oder Augmented-Reality-Darstellung angezeigt werden. Dies kann beispielsweise auf einem Display erfolgen, auf dem die Bewegungen der Instrumente des Telemanipulationsroboters dem Benutzer angezeigt werden. Auf diesem Display ist gleichzeitig das zu manipulierende Objekt dargestellt, so dass der erreichbare Arbeitsraum auch auf dem Display immer direkt am zu manipulierenden Objekt angezeigt werden kann.

Die Darstellung der virtuellen Realität kann unter Verwendung von Linien, Punkten, Flächen, 3D-Objekten etc. erfolgen. Bei einer Darstellung im Kamerabild mittels Augmented Reality kann beispielsweise die Kamera eines Smartphones oder ein Head-Mounted-Display verwendet werden.

Das Erfassen der räumlichen Position der Begrenzungsstruktur kann beispielsweise kontinuierlich erfolgen und insbesondere dadurch stattfinden, dass diese durch die Spitze des Instruments angefahren wird und diese angefahrene Position gespeichert wird. Da der Steuerung des Roboterarms die Position der Spitze des Instruments aufgrund der bekannten Gelenkwinkel des Roboterarms stets bekannt ist, kann durch Anfahren der räumlichen Position der Begrenzungsstruktur diese Position genau erfasst werden. Dieses Erfassen findet hierbei direkt im Koordinatensystem des Roboterarms statt. Somit ist im Koordinatensystem des Roboterarms bekannt, an welchen Stellen kinematische Begrenzungen des Arbeitsraums vorliegen. Ferner ist der Steuerung des Roboterarms selbstverständlich die Position des Roboterarms, insbesondere die räumliche Position seiner Basis, bekannt. Basierend auf diesen Informationen kann der erreichbare Arbeitsraum im Koordinatensystem des Roboterarms berechnet und angezeigt werden. Wesentlich ist, dass die genannten Informationen in einem einzigen Koordinatensystem vorliegen.

Die genannten Informationen können auch in unterschiedlichen Koordinatensystemen erfasst und anschließend in ein gemeinsames Koordinatensystem transformiert werden. Beispielsweise kann die räumliche Position der Begrenzungsstruktur dadurch erfasst werden, dass die Spitze eines Markierungselements an dieser Position positioniert wird und die räumliche Position der Spitze des Markierungselements durch ein Trackingsystem erfasst und gespeichert wird. In diesem Fall ist die Position der Begrenzungsstruktur im Koordinatensystem des Trackingsystems bekannt. Sie müsste somit für eine Darstellung des erreichbaren Arbeitsraums im Koordinatensystem des Roboterarms in dieses Koordinatensystem umgerechnet werden.

Somit wird zusätzlich zur Position der Begrenzungsstruktur die Position des Roboterarms und insbesondere seiner Basis verwendet, um den erreichbaren Arbeitsraum zu berechnen und anzuzeigen.

Zusätzlich zum erreichbaren Arbeitsraum kann ein Zielarbeitsraum angezeigt werden, der erreicht werden muss, um die geplante Manipulation am Objekt durchzuführen. Der Zielarbeitsraum hängt von der geplanten Operation ab. Hierbei kann insbesondere der Grad der Überlappung zwischen dem erreichbaren Arbeitsraum und dem Zielarbeitsraum angezeigt werden. Dies kann beispielsweise in Form einer Prozentangabe erfolgen.

Weiterhin ist es möglich, dass der Abstand zwischen dem Manipulatorarm und/ oder dem Instrument und der kinematischen Begrenzung des Arbeitsraums angezeigt wird. Somit kann ein Benutzer besonders einfach erkennen, in welche Position der Manipulatorarm nicht verfahren werden kann und wann diese Position erreicht wird. Eine intuitive Planung der Operation wird somit zusätzlich unterstützt.

Durch die dargestellten Schritte ist es insbesondere möglich, auf eine zeitaufwändige Planung in der virtuellen Realität zu verzichten. Vielmehr kann sehr einfach und schnell herausgefunden werden, in welchem Ausmaß die geplante Operation bei einer bestimmten Konfiguration durchführbar ist.

Zur genaueren Berechnung des erreichbaren Arbeitsraums ist es bevorzugt, die kinematischen Begrenzungen des Arbeitsraums im Koordinatensystem des Manipulatorarms zu vermessen. Um gleichzeitig den Zielarbeitsraum und den erreichbaren Arbeitsraum anzuzeigen ist es bevorzugt, den Zielarbeitsraum im gleichen Koordinatensystem wie den erreichbaren Arbeitsraum zu bestimmen. Hierbei kann es sich um das Koordinatensystem des Manipulatorarms handeln.

Weiterhin ist es bevorzugt, dass die Richtung angezeigt wird, in die der Manipulatorarm und/ oder das Instrument bewegt werden müssen, um eine größere Überlappung des erreichbaren Arbeitsraums mit einem gewünschten Zielarbeitsraum zu erreichen.

Ferner kann angezeigt werden, ob für eine bessere Erreichbarkeit eines gewünschten Zielarbeitsraums die Basis des Manipulatorarms umpositioniert werden muss.

Weiterhin ist es möglich, dass der Manipulatorarm bei einer nicht vollständigen Überlappung automatisch in eine Richtung bewegt wird, die zu einer größeren Überlappung führen würde. Dies kann beispielsweise durch Verwendung einer virtuellen Feder geschehen.

Im Folgenden wird eine bevorzugte Ausführungsform der Erfindung anhand einer Figur erläutert.

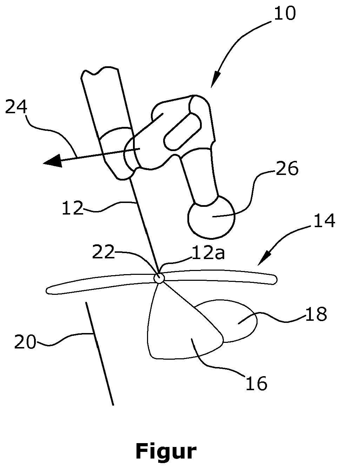

Die Figur zeigt eine schematische Darstellung eines Manipulatorarms bei einer Operation.

Der Manipulatorarm 10 eines Telechirurgieroboters ist an seinem distalen Ende mit einem Instrument 12 verbunden, dessen Spitze über den Einstichpunkt 22 in den Körper 14 eines Patienten eingeführt ist. Der erreichbare Arbeitsraum ist mit dem Bezugszeichen 16 versehen, während der gewünschte Arbeitsraum das Bezugszeichen 18 hat. Wie in der Figur erkennbar ist, sind diese Arbeitsbereiche 16, 18 nicht deckungsgleich. Es wird somit eine Überlappung von 30% angezeigt.

Gleichzeitig kann ein Pfeil 24 angezeigt werden, der in eine Richtung weist, in die der Manipulatorarm 10 bewegt werden müsste, um zu einer größeren Überlappung der Arbeitsbereiche 16, 18 zu kommen. Hierbei würde gleichzeitig der Trokarpunkt verschoben. Ggf. kann der Roboterarm 10 auch aktiv in diese Richtung gedrückt werden. Die Anzeige des erreichbaren Arbeitsraums 16 kann beispielsweise in dem Bild eines bildgebenden Sensors, beispielsweise eines Endoskops, eines Ultraschallgeräts, etc. erfolgen.

Auf die genannte Weise kann eine sehr schnelle, optimale Positionierung des Instruments 12 und des Roboterarms 10 relativ zum manipulierenden Objekt 14 erreicht werden.

Das erfindungsgemäße Verfahren eignet sich neben medizinischen und industriellen Anwendungen auch für baugewerbliche Anwendungen, beispielsweise für die Positionierung von Kränen.

## Patentansprüche

1. Verfahren zum Konfigurieren der Arbeitszelle eines Telechirurgieroboters, mit den Schritten:
- Erfassen der räumlichen Position und/ oder Lage mindestens einer Begrenzungsstruktur (20, 22), die eine kinematische Begrenzung des Arbeitsraums (16) verursacht, der mit einem Instrument (12) erreichbar ist, das mit einem Roboterarm (10) des Roboters verbunden ist,
- Schritthaltendes Darstellen des erreichbaren Arbeitsraums (16) unmittelbar an dem durch das Instrument (12) zu manipulierenden Patientenkörper (14) derart, dass eine Veränderung der Position und/ oder Lage der Begrenzungsstruktur (20, 22) in Echtzeit zu einer Veränderung des dargestellten erreichbaren Arbeitsraums (16) führt,
dass zusätzlich die Richtung (24) angezeigt ; wird, in die der Manipulatorarm (10) und/oder das Instrument (12) bewegt werden müssen, um eine größere Überlappung des erreichbaren Arbeitsraums (16) mit einem gewünschten Zielarbeitsraum (18) zu erreichen.

2. Verfahren nach Anspruch 1, **dadurch gekennzeichnet, dass** das Erfassen der räumlichen Position der Begrenzungsstruktur (20, 22) dadurch stattfindet, dass diese durch die Spitze (12a) des Instruments (12) angefahren wird und diese angefahrene Position erfasst wird.

3. Verfahren nach Anspruch 1, **dadurch gekennzeichnet, dass** das Erfassen der räumlichen Position der Begrenzungsstruktur (20, 22) dadurch stattfindet, dass die Spitze eines Markierungselements an dieser Position positioniert wird und die räumliche Position der Spitze des Markierungselements durch ein Tracking-System erfasst wird.

4. Verfahren nach einem der Ansprüche 1 - 3, **dadurch gekennzeichnet, dass** zusätzlich zur Position der Begrenzungsstruktur (20, 22) die Position des Roboterarms (10), insbesondere seiner Basis (26), verwendet wird, um den erreichbaren Arbeitsraum zu berechnen und anzuzeigen.

5. Verfahren nach einem der Ansprüche 1 - 4, **dadurch gekennzeichnet, dass** der Arbeitsraum (16) durch eine Projektion unmittelbar auf dem zu manipulierenden Objekt (14) selbst oder auf einer Anzeigevorrichtung zusammen mit dem zu manipulierenden Objekt (14) im Rahmen einer Virtual-Reality-Darstellung und/ oder Augmented-Reality-Darstellung angezeigt wird.

6. Verfahren nach einem der Ansprüche 1 - 5, **dadurch gekennzeichnet, dass** zusätzlich zum erreichbaren Arbeitsraum (16) ein Zielarbeitsraum (18) angezeigt wird, der erreicht werden muss, um die geplante Manipulation am Objekt (14) durchzuführen, wobei insbesondere zusätzlich der Grad der Überlappung zwischen dem erreichbaren Arbeitsraum (16) und dem Zielarbeitsraum (18) angezeigt wird.

7. Verfahren nach einem der Ansprüche 1 - 3, **dadurch gekennzeichnet, dass** der Abstand zwischen dem Manipulatorarm (10) und/ oder dem Instrument (12) und einer Begrenzungsstruktur (20, 22), die eine kinematische Begrenzung (20) des Arbeitsraums (16, 18) verursacht, angezeigt wird.

8. Verfahren nach einem der Ansprüche 1 - 7, **gekennzeichnet durch** den vorausgehenden Schritt:
Vermessen der kinematischen Begrenzung (20) des Arbeitsraums (16, 18) im Koordinatensystem des Manipulatorarms (10).

9. Verfahren nach Anspruch 8, **dadurch gekennzeichnet, dass** der Roboter ein Telechirurgieroboter und das zu manipulierende Objekt (14) der Körper eines Patienten ist und als kinematische Begrenzung (20) des Arbeitsraums (16, 18) ein Einstichpunkt (22) für das Instrument (12) am Körper (14) des Patienten angezeigt wird.

10. Verfahren nach einem der Ansprüche 1 - 9, **dadurch gekennzeichnet, dass** zusätzlich angezeigt wird, ob für eine bessere Erreichbarkeit eines gewünschten Zielarbeitsraums (18) die Basis (26) des Manipulatorarms (10) umpositioniert werden muss und/ oder der Manipulatorarm (10) bei einer nicht vollständigen Überdeckung zwischen dem erreichbaren Arbeitsraum (16) und einem gewünschten Zielarbeitsraum (18) automatisch in eine Richtung (24) bewegt wird, die zu einer größeren Überlappung führt.

## Claims

1. A method for configuring a work cell of a telesurgery robot, comprising the following steps:
- detecting the spatial position and/or location of at least one delimiting structure (20, 22), which causes a kinematic delimitation of the work space (16) that can be reached by an instrument (12) connected to a robotic arm (10) of the robot;
- continuously representing the reachable work space (16) on an object (14) to be manipulated by the instrument (12) in such a way that a change in the position and/or location of the delimiting structure (20, 22) results, in real time, in a change of the represented reachable work space (16), and that additionally the direction (24) is displayed in which the manipulator arm (10) and/or the instrument (12) must be moved to achieve greater overlap of the reachable work space (16) with a desired target work space (18).

2. The method according to claim 1, **characterized in that** the spatial position of the delimiting structure (20, 22) is detected by moving the tip (12a) of the instrument (12) to this position, and by detecting this position.

3. The method according to claim 1, **characterized in that** the spatial position of the delimiting structure (20, 22) is detected by positioning the tip of a marking element in this position, and by detecting the spatial position of the tip of the marking element by way of a tracking system.

4. A method according to any one of claims 1 to 3, **characterized in that**, in addition to the position of the delimiting structure (20, 22), the position of the robotic arm (10), and more particularly that of the base (26) thereof, is used to calculate and display the reachable work space.

5. A method according to any one of claims 1 to 4, **characterized in that** the work space (16) is displayed by projection directly on the object (14) to be manipulated itself, or on a display device together with the object (14) to be manipulated as part of a virtual reality representation and/or an augmented reality representation.

6. A method according to any one of claims 1 to 5, **characterized in that**, in addition to the reachable work space (16), a target work space (18) is displayed, which must be reached to carry out the planned manipulation on the object (14), wherein in particular additionally the degree of overlap between the reachable work space (16) and the target work space (18) is displayed.

7. A method according to any one of claims 1 to 3, **characterized in that** the distance between the manipulator arm (10) and/or the instrument (12) and a delimiting structure (20, 22) causing a kinematic delimitation (20) of the work space (16, 18) is displayed.

8. A method according to any one of claims 1 to 7, **characterized by** the preceding step:
measuring the kinematic delimitation (20) of the work space (16, 18) in the coordinate system of the manipulator arm (10).

9. The method according to claim 8, **characterized in that** the robot is a telesurgery robot and the object (14) to be manipulated is the body of a patient, and a puncture point (22) for the instrument (12) on the body (14) of the patient is displayed as the kinematic delimitation (20) of the work space (16, 18).

10. A method according to any one of claims 1 to 9, **characterized in**, wherein it is additionally displayed whether the base (26) of the manipulator arm (10) must be repositioned for improved reachability of a desired target work space (18) and/or, in the event of less than full overlap between the reachable work space (16) and a desired target work space (18), the manipulator arm (10) is automatically moved in a direction (24) that results in greater overlap.

## Revendications

1. Procédé destiné à la configuration de la cellule de travail d'un robot de télé-chirurgie, comprenant les phases suivantes :
- la détection de la position et/ ou de la situation dans l'espace d'au moins une structure de délimitation (20, 22) qui provoque une délimitation cinématique de la zone de travail (16), laquelle peut être atteinte au moyen d'un instrument (12) qui est relié à un bras (10) du robot de télémanipulation ;
- la représentation en temps réel de la zone de travail (16) qui peut être atteinte, directement au niveau du corps du patient (14) qui doit être manipulé par l'intermédiaire de l'instrument (12), de telle sorte qu'une modification en temps réel de la position et/ ou de la situation de la structure de délimitation (20, 22) aboutit à une modification de la zone de travail (16) représentée qui peut être atteinte ;
**caractérisé en ce que** la direction (24), dans laquelle le bras du robot de télémanipulation (10) et/ ou l'instrument (12) doivent être déplacés en vue d'atteindre, au moyen d'une zone de travail cible (18) souhaitée, un plus grand chevauchement de la zone de travail (16) qui peut être atteinte, est en outre indiquée.

2. Procédé selon la revendication 1, **caractérisé en ce que** la détection de la position dans l'espace de la structure de délimitation (20, 22) est réalisée de telle sorte que cette position est atteinte par la pointe (12a) de l'instrument (12) et que cette position atteinte est détectée.

3. Procédé selon la revendication 1, **caractérisé en ce que** la détection de la position dans l'espace de la structure de délimitation (20, 22) est réalisée de telle sorte que la pointe d'un élément de marquage est positionnée au niveau de cette position et la position dans l'espace de la pointe de l'élément de marquage est détectée par l'intermédiaire d'un système de suivi.

4. Procédé selon l'une des revendications 1 à 3, **caractérisé en ce que**, en plus de la position de la structure de délimitation (20, 22), la position du bras du robot de télémanipulation (10), en particulier de sa base (26), est utilisée en vue de calculer et d'afficher la zone de travail qui peut être atteinte.

5. Procédé selon l'une des revendications 1 à 4, **caractérisé en ce que** la zone de travail (16) est affichée directement par l'intermédiaire d'une projection sur l'objet (14) proprement dit qui doit être manipulé, ou sur un dispositif d'affichage en même temps que l'objet (14) qui doit être manipulé, dans le cadre d'une représentation en réalité virtuelle et/ ou d'une représentation en réalité augmentée.

6. Procédé selon l'une des revendications 1 à 5, **caractérisé en ce que**, en plus de la zone de travail (16) qui peut être atteinte, une zone de travail cible (18) qui doit être atteinte, est affichée en vue de réaliser la manipulation prévue sur l'objet (14), selon lequel, en particulier, le degré de chevauchement entre la zone de travail (16) qui peut être atteinte et la zone de travail cible (18) est en outre affiché.

7. Procédé selon l'une des revendications 1 à 3, **caractérisé en ce que** la distance entre le bras du robot de télémanipulation (10) et/ ou l'instrument (12), d'une part, et une structure de délimitation (20, 22) qui provoque une délimitation (20) cinématique de la zone de travail (16, 18), d'autre part, est affichée.

8. Procédé selon l'une des revendications 1 à 7, **caractérisé par** la phase préalable suivante : le mesurage de la délimitation (20) cinématique de la zone de travail (16, 18) dans le système de coordonnées du bras du robot de télémanipulation (10).

9. Procédé selon la revendication 8, **caractérisé en ce que** le robot de télémanipulation est un robot de téléchirurgie et l'objet (14) devant être manipulé est le corps d'un patient et **caractérisé en ce qu'**un point d'introduction (22) pour l'insertion de l'instrument (12) dans le corps (14) du patient est affiché sous la forme d'une délimitation (20) cinématique de la zone de travail (16, 18).

10. Procédé selon l'une des revendications 1 à 9, **caractérisé en ce que** l'affichage indique en outre si la base (26) du bras du robot de télémanipulation (10) doit être repositionnée en vue de permettre une meilleure atteinte d'une zone de travail cible (18) souhaitée et/ ou si le bras du robot de télémanipulation (10) est déplacé automatiquement dans une direction (24) qui aboutit à un chevauchement trop important, quand il existe un recouvrement incomplet entre la zone de travail (16) qui peut être atteinte et une zone de travail cible (18) souhaitée.
